# EUROPEAN PATENT APPLICATION

(11) **EP 2 001 234 A1**
(43) Date of publication of application: **10.12.2008**
(21) Application number: 08151964.7
(22) Date of filing: 26.02.2008
(51) Int. Cl.: H04N 7/24

(54) **Video signal processing apparatus, display apparatus and video signal processing method**

(30) Priority: 04.06.2007 KR 20070054590
(71) Applicant: Samsung Electronics Co., Ltd., Suwon-si, Gyeonggi-do 442-742 (KR)
(72) Inventor: Lee, Sang-soo, Seoul (KR); Lim, Jong-tae, Seoul (KR)
(74) Representative: Davies, Robert Ean

(57) **Abstract**

A video signal processing apparatus (100) and method and a display apparatus (200) are provided. The video signal processing apparatus includes: an input unit (110) through which a video signal is input; a signal processing unit (120) which processes the video signal input through the input unit, wherein signal processing unit encodes the video signal if a transmission distance from the transmitting unit to the display apparatus is greater than a reference distance; and a transmitting unit (130) which transmits the video signal processed by the signal processing unit to a display apparatus using wireless communication .

## Description

Apparatuses and methods consistent with the present invention relate to video signal processing, and more particularly but not exclusively, to video signal processing in which a video signal is transmitted to a display apparatus by means of a wireless communication.

A video signal processing apparatus such as a set top box or the like transmits a video signal to an external display apparatus such as a television. In the case of a mobile display apparatus, a video signal processing apparatus transmits a video signal to the display apparatus by means of wireless communication. To this end, various wireless communication methods may be applied. For example, IEEE 802.11n communication and ultra-wideband (UWB) communication may be employed for a high-speed wireless communication to transmit a video signal having a large amount of information.

In the wireless communication, the video signal processing apparatus and the display apparatus can communicate each other with a variable transmission distance. For example, a small mobile television may have a transmission distance of several meters to several tens of meters.

The various wireless communication methods have various transmission distances. For example, IEEE 802.11n communication has a transmission distance of about 50 m, and UWB communication has a transmission distance of about 10 m.

Picture quality of the transmitted video signal may vary depending on the kind of the wireless communication. Generally, wireless communication having a relatively long transmission distance has a relatively narrow bandwidth, and thus, encodes the video signal for transmission. Here, the picture quality may deteriorate during encoding the video signal, and as a result, the picture quality of the transmitted video signal also deteriorates. For example, the picture quality of the video signal transmitted using IEEE 802.11n communication which is an encoding wireless communication method is inferior to the picture quality of the video signal transmitted using UWB communication, which is a non-encoding wireless communication method. Particularly, in the case of a high definition (HD) or higher definition video signal, the picture quality remarkably deteriorates due to encoding.

As described above, the wireless communication may be classified as the encoding and non-encoding types, and may have various transmission distances and different picture qualities.

A related art video signal processing apparatus employs only one wireless communication method, and thus, is limited in its transmission distance or picture quality. For example, in the case that the video signal processing apparatus employs IEEE 802.11n communication, a long transmission distance can be provided as compared to UWB communication but the picture quality becomes inferior. Contrarily, in the case that the video signal processing apparatus employs UWB communication, a video signal of high picture quality can be transmitted as compared IEEE 802.11n communication but the transmission distance becomes short.

Further, the non-encoding wireless communication occupies a relatively wide bandwidth, and thus, it is not easy to secure bandwidths for communication through a plurality of channels. For example, in the case of a standard definition (SD) or lower definition video signal, a picture quality difference between UWB communication and IEEE 802.11n communication is not significant. Accordingly, it is not efficient to transmit a video signal of low picture quality using UWB communication which requires a wide bandwidth.

Embodiments of the present invention aim to provide a video signal processing apparatus, a display apparatus and a video signal processing method in which a video signal of an optimal picture quality can be transmitted according to user's various demands.

Embodiments of the present invention also aim to provide a video signal processing apparatus which can secure a wide communication bandwidth for a video signal of high picture quality.

According to an aspect of the present invention, there is provided a video signal processing apparatus including: an input unit through which a video signal is input; a signal processing unit which processes the video signal input through the input unit, wherein signal processing unit encodes the video signal if a transmission distance from the transmitting unit to the display apparatus is greater than a reference distance; and a transmitting unit which transmits the video signal processed by the signal processing unit to a display apparatus using wireless communication.

The reference distance may be a maximum transmission distance which the transmitting unit can transmit a non-encoded video signal.

The controlling unit may control the signal processing unit to encode the video signal, if picture quality of the video signal is equal to or less than a predetermined reference picture quality.

The reference picture quality may be SD.

The transmitting unit may include a first transmitting unit which transmits the video signal which is encoded in the signal processing unit and a second transmitting unit which transmits the video signal which is not encoded.

The first transmitting unit may transmit the encoded video signal using IEEE 802.11n communication.

The second transmitting unit may transmit the video signal by at least one of ultra-wideband (UWB) communication and millimetre wave communication.

The video signal processing apparatus may further include a distance determining unit which determines the transmission distance from the transmitting unit to the display apparatus.

The video signal processing apparatus may further include a controlling unit which controls the signal processing unit to encode the video signal if the transmission distance from the transmitting unit to the display apparatus is greater than the reference distance or if a picture quality of the video signal is equal to or less than a reference picture quality.

According to another aspect of the present invention, there is provided a video signal processing apparatus including: an input unit through which a video signal is input; a signal processing unit which processes the video signal input through the input unit; and a transmitting unit which transmits the video signal processed by the signal processing unit to a display apparatus using a wireless communication; and a controlling unit which controls the signal processing unit to encode the video signal if picture quality of the video signal is equal to or less than a predetermined reference picture quality.

According to another aspect of the present invention, there is provided a display apparatus including: a first receiving unit which receives an encoded video signal from a video signal processing apparatus; a second receiving unit which receives a non-encoded video signal from the video signal processing apparatus; a video processing unit which processes one of the encoded video signal received by the first receiving unit and the non-encoded video signal received by the second receiving unit; and a display unit which displays the encoded or non-encoded video signal processed by the video processing unit.

The display apparatus may further include a distance determining unit which determines a transmission distance from the video signal processing apparatus to the display apparatus according to a sensitivity of a signal which is received from the video signal processing apparatus.

According to another aspect of the present invention, there is provided a video signal processing method including: receiving a video signal; processing the video signal which is received, wherein the processing comprises encoding the video signal if a transmission distance from a display apparatus is greater than a reference distance; and transmitting the processed video signal to the display apparatus.

The reference distance may be a maximum transmission distance which a video signal which is not encoded can be transmitted.

The video signal processing method may further include: encoding the video signal, if the transmission distance from the display apparatus is shorter than the reference distance and picture quality of the video signal is equal to or less than a predetermined reference picture quality.

The reference picture quality may be SD.

The encoded video signal may be transmitted using IEEE 802.11n communication.

The video signal which is not encoded may be transmitted by at least one of UWB communication and millimetre wave communication.

For a better understanding of the invention, and to show how embodiments of the same may be carried into effect, reference will now be made, by way of example, to the accompanying diagrammatic drawings in which:
FIG. 1 is a block diagram illustrating a video signal processing apparatus according to a first exemplary embodiment of the present invention;
FIG. 2 is a block diagram illustrating a video signal processing apparatus according to a second exemplary embodiment of the present invention;
FIG. 3 is a block diagram illustrating a display apparatus according to an exemplary embodiment of the present invention; and
FIG. 4 is a flow diagram for illustrating a video signal processing method according to an exemplary embodiment of the present invention.

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures.

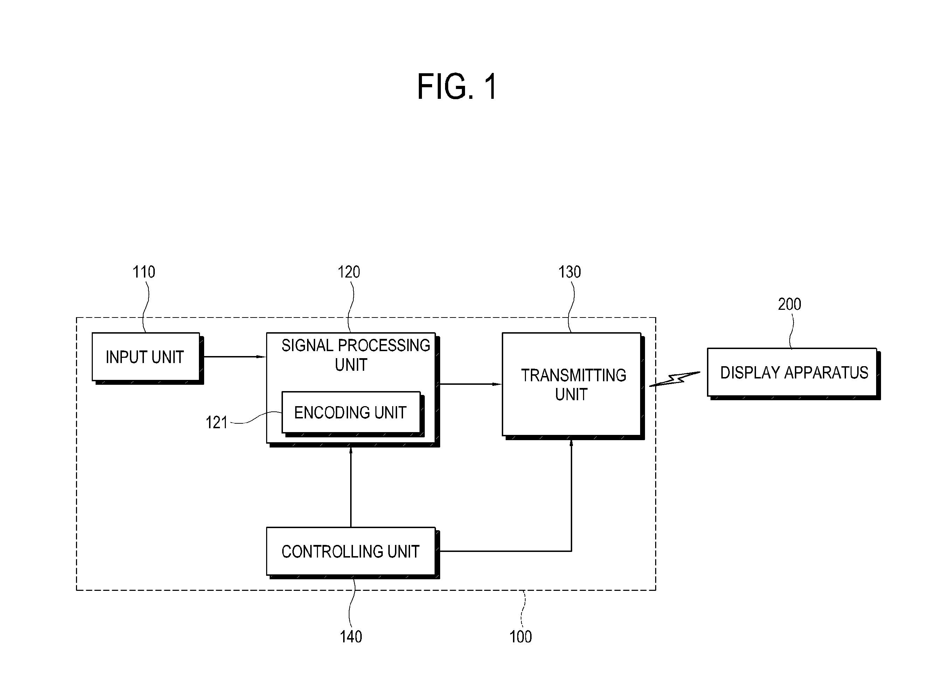

Referring to FIG. 1, a video signal processing apparatus 100 according to a first exemplary embodiment of the present invention may transmit a video signal to a display apparatus 200. The video signal processing apparatus 100 may be a set top box and the display apparatus 200 may be a television which receives the video signal from the set top box.

As shown in FIG. 1, the video signal processing apparatus 100 includes an input unit 110, a signal processing unit 120, a transmitting unit 130 and a controlling unit 140.

A video signal is input to input unit 110. The input unit 110 may include an input terminal (not shown) and a broadcast receiving unit (not shown) which receives a broadcast signal. The video signal includes a video signal which is input from an external device and a video signal of the received broadcast signal. For example, the input terminal may include a high-definition multimedia interface (HDMI), a digital visual interface (DVI), a component, an S-video terminal, and the like, which are connected to various outside devices such as a computer, a digital versatile disk (DVD) player and a video cassette recorder (VCR).

The signal processing unit 120 processes the video signal which is input through the input unit 110. The signal processing unit 120 may or may not perform encoding for the video signal according to a command of the controlling unit 140. The signal processing unit 120 may include an encoding unit 121 which encodes the video signal. MPEG-2, JPEG2000, HD Codec, or the like may be employed for encoding. The signal processing unit 120 may process the video signal of the broadcast signal which is received through the broadcast signal receiving unit.

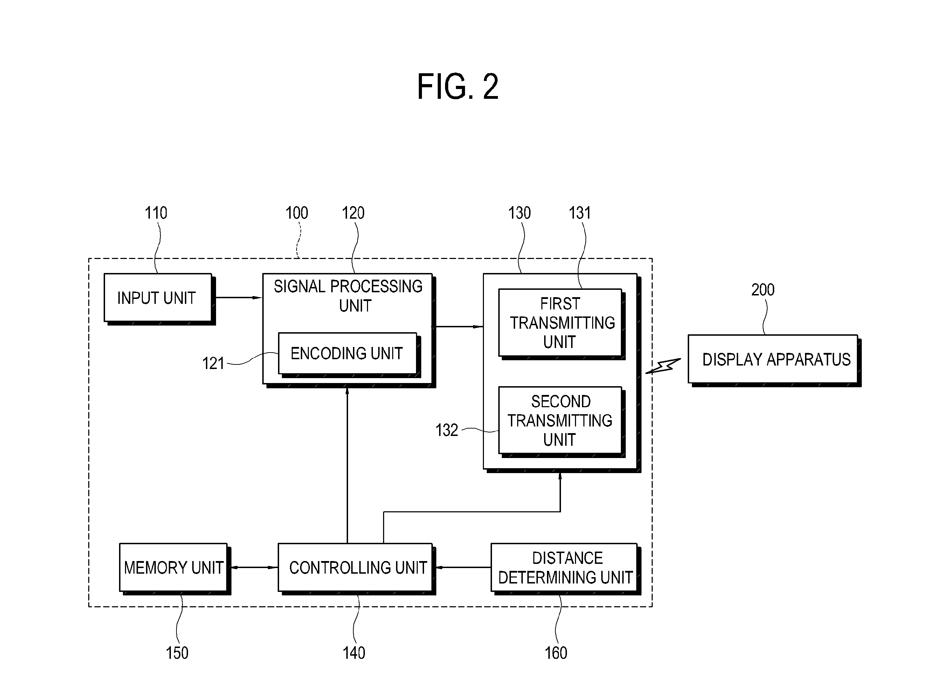

The transmitting unit 130 transmits the video signal processed in the signal processing unit 120 to the display apparatus 200 by means of wireless communication. As shown in FIG. 2, the transmitting unit 130 may include a first transmitting unit 131 to transmit the video signal which is encoded in the signal processing unit 120 and a second transmitting unit 132 to transmit the video signal which is not encoded.

The first transmitting unit 131 may transmit the encoded video signal using IEEE 802.11n communication.

The second transmitting unit 132 may transmit the video signal by at least one of UWB communication and 60 GHz millimetre wave communication. Here, UWB communication can perform transmission at a speed of several hundred Mbps within a transmission distance of 10m. 60 GHz millimetre wave communication can perform transmission at a maximum speed of 12 Gbps. In this case, only a short-distance transmission is possible due to a straight characteristic of its electric wave.

The controlling unit 140 controls the signal processing unit 120 to perform encoding the video signal if the transmission distance from the transmitting unit 130 to the display apparatus 200 is longer than a predetermined reference distance. The reference distance denotes a maximum transmission distance at which the transmitting unit 130 can transmit the video signal which is not encoded.

For example, in the case that the transmitting unit 130 employs UWB communication, which is a non-encoding audio/video (AV) stream wireless communication technology, the reference distance is equal to the maximum transmission distance of UWB communication, that is, about 10 m. Accordingly, the controlling unit 140 controls the signal processing unit 120 to encode the video signal if the transmission distance is greater than the reference distance, and controls the signal processing unit 120 to not encode the video signal if the transmission distance is equal to or less than the reference distance. Alternatively, in transmitting a full HD video signal, the signal processing unit 120 may encode the video signal even when communication UWB is employed.

The video signal processing apparatus 100 may be implemented without controlling unit 140.

The video signal processing unit 100 transmits the encoded video signal to the display apparatus 200 through the first transmitting unit 131 by IEEE 802.11n communication, which is an encoding AV stream wireless communication technology, and transmits the non-encoded video signal to the display apparatus 200 through the second transmitting unit 132 by UWB communication.

The controlling unit 140 may control the signal processing unit 120 to encode the video signal if the picture quality of the video signal is equal to or less than a predetermined reference picture quality. For example, in the case of an SD or lower definition video signal, even if the transmission distance is equal to or less than the reference distance, the controlling unit 140 may control the signal processing unit 120 to encode the video signal, because the picture quality of the SD or lower video signal is not good in itself and thus does not deteriorate significantly during encoding. In this case, a wide bandwidth for the non-encoding wireless communication can be secured, which is advantageous for communication through a plurality of channels.

The reference picture quality may be predetermined as SD. Generally, the picture quality of a video signal may be classified as SD, HD and full HD on the basis of the number of vertical scanning lines. Here, SD has 480 vertical scanning lines and is suitable for a typical analog television; HD has 1080i (interlaced) lines, provides a picture ratio of 16:9 and is suitable for an HD television; and full HD has 1080p (progressive) lines and provides a picture quality superior to HD.

As shown in FIG. 2, the video signal processing apparatus 100 may further include a memory unit 150 and a distance determining unit 160.

The memory unit 150 stores therein the maximum transmission distance at which the transmitting unit 130 can transmit the video signal which is not encoded. The controlling unit 140 may control the signal processing unit 120 to perform encoding the video signal on the basis of the stored maximum transmission distance. Here, the memory unit 150 may be provided as a nonvolatile memory by way of example.

The distance determining unit 160 determines a transmission distance from the transmitting unit 130 to the display apparatus 200 and informs the controlling unit 140 the determined transmission distance. The distance determining unit 160 may determine the transmission distance by means of a supersonic sensor or an infrared sensor. The distance determining unit 160 may be provided in the video signal processing unit 100, or alternatively, may be provided in the display apparatus 200 to send information on the transmission distance to the video signal processing unit 100.

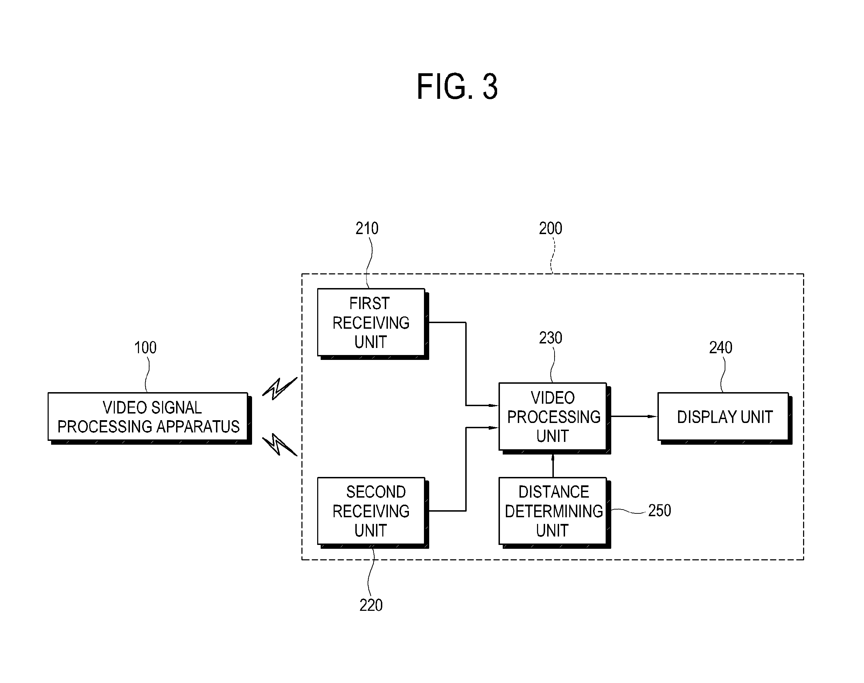

Hereinafter, the display apparatus 200 according to an exemplary embodiment of the present invention will be described with reference to FIG. 3.

As shown in FIG. 3, the display apparatus 200 includes a first receiving unit 210, a second receiving unit 220, a video processing unit 230 and a display unit 240. The display apparatus 200 may further include a distance determining unit 250.

The first receiving unit 210 receives the encoded video signal from the video signal processing apparatus 100, for example, by IEEE 802.11n communication.

The second receiving unit 220 receives the non-encoded video signal from the video signal processing apparatus 100, for example, by at least one of UWB communication and millimetre wave communication.

The video processing unit 230 processes the video signal received through the first and second receiving units 210 and 220. The video processing unit 230 may include a decoder (not shown) to decode the encoded video signal.

The display unit 240 displays the video signal which has been processed by the video processing unit 230. The display unit 240 may be provided as a cathode ray tube (CRT), a liquid crystal display (LCD), a plasma display panel (PDP), or the like.

The distance determining unit 250 determines the transmission distance between the video signal processing apparatus 100 and the display apparatus 200 according to sensitivity of a signal from the video signal processing apparatus 100.

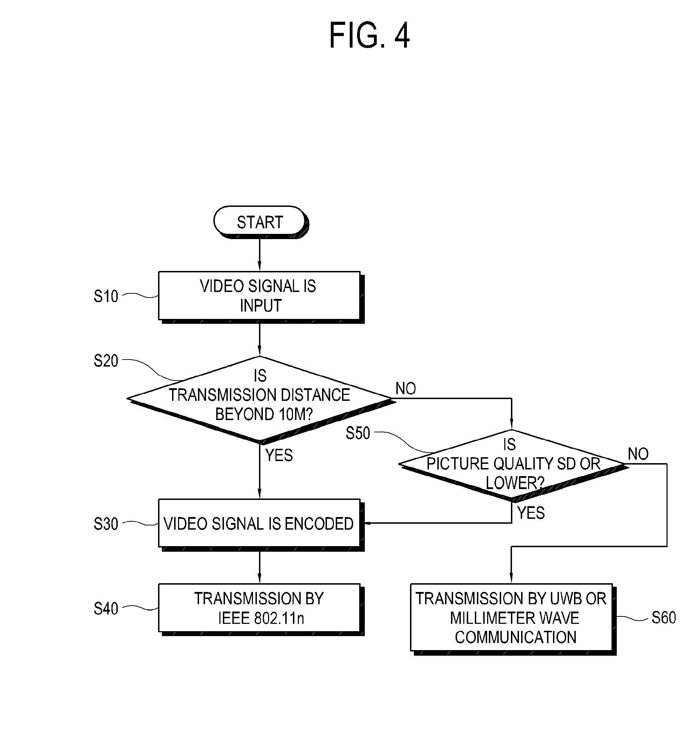

Hereinafter, a method for controlling the video signal processing apparatus according to an exemplary embodiment of the present invention will be described by referring to FIG. 4.

The video signal processing apparatus 100 receives a video signal through the input unit 110 (S10).

Then, the video signal processing apparatus 100 determines whether the transmission distance is greater than the reference distance, for example, 10 m (S20). If it is determined that the transmission distance is beyond the reference distance, the controlling unit 140 controls the signal processing unit 120 to encode the video signal (S30).

The video signal encoded at operation S30 is transmitted to the display apparatus 200 through the first transmitting unit by IEEE 802.11n communication (S40).

On the other hand, if it is determined at operation S20 that the transmission distance is equal to or shorter than the reference distance, the controlling unit 140 determines whether the picture quality of the video signal is equal to or less than the reference picture quality, for example, SD (S50). If it is determined that the picture quality of the video signal is equal to or lower than SD, operations S30 and S40 are performed.

If it is determined that the picture quality of the video signal is higher than the reference picture quality at operation S50, the video signal is transmitted to the display apparatus through the second transmitting unit by UWB communication or millimetre wave communication (S60). That is, if the transmission distance is equal to or less that the reference distance and the picture quality of the video signal is higher than the reference picture quality, the non-encoded video signal is transmitted to the display apparatus.

As described above, according to embodiments of the present invention, there are provided a video signal processing apparatus, a display apparatus and a video signal processing method which is capable of providing an optimal picture quality according to user's demand.

Further, a relatively wide bandwidth for high picture quality can be secured.

Although a few embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video signal processing apparatus comprising:
an input unit (110) through which a video signal is input;
a signal processing unit (120) which processes the video signal input through the input unit, wherein signal processing unit encodes the video signal if a transmission distance from the transmitting unit to the display apparatus is greater than a reference distance; and
a transmitting unit (130) which transmits the video signal processed by the signal processing unit to a display apparatus (200) using wireless communication.

2. The video signal processing apparatus according to claim 1, wherein the reference distance is a maximum transmission distance which the transmitting unit can transmit a non-encoded video signal.

3. The video signal processing apparatus according to claim 1 or 2, wherein the signal processing unit (120) encodes the video signal if a picture quality of the video signal is equal to or less than a reference picture quality.

4. The video signal processing apparatus according to claim 3, wherein the reference picture quality is standard definition.

5. The video signal processing apparatus according to any preceding claim, wherein the transmitting unit (130) comprises a first transmitting unit (131) which transmits the video signal if the video signal is encoded by the signal processing unit and a second transmitting unit (132) which transmits the video signal if the video signal is not encoded by the signal processing unit.

6. The video signal processing apparatus according to claim 5, wherein the first transmitting unit transmits the encoded video signal using IEEE 802.11n communication.

7. The video signal processing apparatus according to claim 5 or 6, wherein the second transmitting unit transmits the non-encoded video signal using at least one of ultra-wideband communication and millimetre wave communication.

8. The video signal processing apparatus according to any preceding claim further comprising a distance determining unit (160) which determines the transmission distance from the transmitting unit (130) to the display apparatus (260).

9. The video signal processing apparatus according to any preceding claim further comprising a controlling unit (140) which controls the signal processing unit (120) to encode the video signal if the transmission distance from the transmitting unit to the display apparatus is greater than the reference distance or if a picture quality of the video signal is equal to or less than a reference picture quality.

10. A video signal processing apparatus comprising:
an input unit (110) through which a video signal is input;
a signal processing unit (120) which processes the video signal input through the input unit;
a transmitting unit (130) which transmits the video signal processed by the signal processing unit to a display apparatus using a wireless communication; and
a controlling unit (140) which controls the signal processing unit to encode the video signal if picture quality of the video signal is equal to or less than a predetermined reference picture quality.

11. A display apparatus (200) comprising:
a first receiving unit (210) which receives an encoded video signal from a video signal processing apparatus (100);
a second receiving unit (220) which receives a non-encoded video signal from the video signal processing apparatus (100);
a video processing unit (230) which processes one of the encoded video signal received by the first receiving unit and the non-encoded video signal received by the second receiving unit; and
a display unit (240) which displays the encoded or non-encoded video signal processed by the video processing unit.

12. The display apparatus according to claim 11 further comprising a distance determining unit (250) which determines a transmission distance from the video signal processing apparatus (100) to the display apparatus (200) according to a sensitivity of the encoded or non-encoded video signal which is received from the video signal processing apparatus.

13. A video signal processing method comprising:
receiving a video signal;
processing the video signal which is received, wherein the processing comprises encoding (S30) the video signal if a transmission distance from a display apparatus is greater than a reference distance; and
transmitting (S40) the processed video signal to the display apparatus using wireless communication.

14. The video signal processing method according to claim 13, wherein the reference distance is a maximum transmission distance which a non-encoded video signal can be transmitted.

15. The video signal processing method according to claim 13, wherein the processing comprises encoding the video signal if the transmission distance from the display apparatus is less than the reference distance and a picture quality of the video signal is equal to or less than a reference picture quality.

16. The video signal processing method according to claim 15, wherein the reference picture quality is standard definition.

17. The video signal processing method according to any of claims 13-16, wherein the processed video signal is transmitted (S40) using IEEE 802.11n communication if the processed video signal is encoded.

18. The video signal processing method according to any of claims 13-17, wherein the processed video signal which is transmitted (S60) by at least one of UWB communication and millimetre wave communication if the processed video signal is not encoded.
